# EUROPÄISCHE PATENTSCHRIFT

(11) **EP 1 095 430 B1**
(45) Veröffentlichungstag und Bekanntmachung des Hinweises auf die Patenterteilung: **08.08.2007**
(21) Anmeldenummer: 00925263.6
(22) Anmeldetag: 05.05.2000
(51) Int. Cl.: H01R 13/533

(54) **VERFAHREN ZUM SCHUTZ VON KABELLITZEN**
METHOD OF PROTECTING CABLE STRANDS
PROCEDE DE PROTECTION DE TORONS DE CABLES

(30) Priorität: 11.05.1999 DE 19921540
(43) Veröffentlichungstag der Anmeldung: 02.05.2001
(73) Patentinhaber: SIEMENS AKTIENGESELLSCHAFT, 80333 München (DE)
(72) Erfinder: ZOELL, Jürgen, D-36266 Heringen-Herta (DE); MUEHLHAUSEN, Ralf, D-36199 Rotenburg (DE)
(86) Internationale Anmeldenummer: PCT/EP2000/004027
(87) Internationale Veröffentlichungsnummer: WO 2000/069032

(56) Entgegenhaltungen:
- EP-A- 0 805 526
- WO-A-90/07807
- DE-A- 3 403 512
- DE-A- 3 614 602
- US-A- 5 370 733
- US-A- 5 885 108

## Beschreibung

Gegenstand der Erfindung ist ein Verfahren zum Schutz von Kabellitzen in aggressiver Umgebung. Kabellitzen, die aus mehreren einzelnen, miteinander verflochtenen oder verdrillten Metalldrähten bestehen, werden vielfach als elektrische Leitungen zum Verbinden elektrischer Bauteile eingesetzt.

Viele elektrische Bauteile sind heutzutage in aggressiver Umgebung angeordnet. So werden beispielsweise in Kraftfahrzeugen Kraftstoffpumpen zum Fördern von Kraftstoff direkt in Kraftstoffbehältern eingesetzt. Während des Betriebs der Kraftstoffpumpe wird auch der die Pumpe antreibende Elektromotor zur Kühlung vom Kraftstoff durchflossen. Damit werden auch die Verbindungsstellen des Elektromotors mit den vorhandenen elektrischen Leitungen vom Kraftstoff umspült. Durch aggressive Bestandteile in Kraftstoffen werden diese Verbindungsstellen derart angegriffen, daß es zu Schädigungen der Verbindungsstellen kommt und das Bauteil letztlich ausfällt. Es sind jedoch nicht nur die in Kraftstoffen enthaltenen Bestandteile, die zur Schädigung führen. Ebenso können an anderen Stellen Feuchtigkeit, Schmutz oder Regenwasser zu Schädigungen von Kabellitzen führen.

Dazu ist bekannt, Kabellitzen mit isolierenden Umhüllungen zu umgeben. Nachteilig an derartigen Umhüllungen ist, daß beim Verbinden der Kabellitzen mit einem Bauteil diese Umhüllung entfernt werden muß und die Verbindungsstelle anschließend freiliegt. Zum Schutz der Verbindungsstellen ist es bekannt, diese mit einer Schutzlackschicht zu versehen. Der Nachteil verwendeter Schutzlacke besteht darin, daß diese nicht gegen alle aggressiven Medien beständig sind, insbesondere gegenüber Ethanol, das Bestandteil mancher Kraftstoffe ist. Zudem ist die Verwendung von Schutzlacken unter ökologischen Gesichtspunkten nachteilig.

Weiterhin ist es bekannt, Kabellitzen mit Schrumpfschläuchen zu isolieren, indem ein Schlauch aus einem entsprechenden Kunststoff unter Wärmeeinwirkung aufgeschrumpft wird. Neben der Isolierung bieten Schrumpfschläuche zwar auch einen gewissen Schutz gegenüber aggressiven Medien. Die Verbindung von Schrumpfschlauch und Kabellitze ist jedoch nie so dicht, daß ein Eindringen des aggressiven Mediums zwischen Kabellitze und Schrumpfschlauch sicher verhindert wird, so daß eine Schädigung der Kabellitze nicht ausgeschlossen ist. Des weiteren ist insbesondere bei kleinen Bauteilen die Montage von derartig isolierten Kabellitzen aufgrund der Elastizität des Schrumpfschlauches mit Schwierigkeiten verbunden. Ein weiterer Nachteil besteht darin, daß Schrumpfschläuche nicht uneingeschränkt einsetzbar sind. So ist ein Schrumpfschlauch zum Schutz einer Verbindungsstelle zwischen einer Kabellitze und einem elektrischen Bauteil nur dann einsetzbar, wenn das Bauteil und die Kabellitze in etwa gleiche Abmessungen hinsichtlich des Durchmessers besitzen.

Dokument DE-A-3403512 offenbart ein Verfahren nach dem Oberbegriff des Anspruchs 1.

Der Erfindung liegt die Aufgabe zugrunde, ein Verfahren zum Schutz von Kabellitzen zu schaffen, um diese wirksam gegen den Angriff von aggressiven Medien zu schützen. Insbesondere die Verbindungsstellen zwischen Kabellitzen und elektrischen Bauteilen sollen nach dem Verfahren geschützt werden.

Gelöst wird die Aufgabe mit den Merkmalen des Anspruchs 1. Weitere vorteilhafte Ausgestaltungen sind in den Unteransprüchen beschrieben.

Es wurde gefunden, daß sich Kabellitzen wirksam in aggressiven Umgebungen schützen lassen, in dem sie partiell mit einem kraftstoffbeständigen Kunststoff umspritzt werden. Das bedeutet, daß die Kabellitze nicht über ihre gesamte Länge, sondern nur in dem Bereich, in dem die Kabellitze aggressiven Medien ausgesetzt ist, umspritzt wird.

Das ist um so überraschender, da nach vorherrschender Meinung davon ausgegangen wurde, daß der beim Spritzgießen unter hohem Druck stehende Kunststoff zwischen die Drähte der Kabellitze eindringt und nach dem Erhärten, insbesondere im Randbereich der Umspritzung scharfe Kanten bildet. Ist die Kabellitze danach Bewegungen ausgesetzt, wie sie z. B. bei einem Kraftfahrzeug der Fall sind, können diese Bewegungen an den Kanten zum Durchtrennen der einzelnen Drähte führen. Infolgedessen kann es zum Bruch der Kabellitze und letztendlich zu einem Ausfall des elektrischen Bauteils kommen.

Mit dem erfindungsgemäßen Verfahren kommt es jedoch nicht zu dem gefürchteten Eindringen des Kunststoffs zwischen die Drähte der Kabellitze, so daß Kabellitzen nunmehr auch partielle Umspritzungen aus Kunststoff aufweisen können, ohne daß die Gefahr von Schädigungen der Kabellitze an den Kanten des umspritzten Kunststoffs bei Bewegungen besteht.

Der große Vorteil besteht darin, daß sich Umspritzungen mit den unterschiedlichsten Formen herstellen lassen. Der Schutz vor aggressiven Medien ist somit nicht mehr ausschließlich auf die einfache Form der Kabellitze beschränkt. Vielmehr können auch komplizierte Geometrien umspritzt werden, so daß nunmehr vor allem die Verbindungsstellen von Kabellitze und elektrischem Bauteil wirksam vor einem Angriff aggressiver Medien geschützt sind und die Kabellitze keiner vorhergehenden Behandlung bedarf.

Dennoch kann es bedingt durch Herstellungsfehler oder durch vorhergehende Montage vorkommen, daß die Kabellitze nicht mehr die notwendige Dichte aufweist. In diesen Fällen ist es vorteilhaft, die Kabellitze im Randbereich der Umspritzung mechanisch zu verdichten. Dadurch wird das Eindringen von Kunststoff in die Kabellitze vermieden.

In einer anderen vorteilhafter Ausgestaltung des Verfahrens wird vor dem Umspritzen mit Kunststoff die Kabellitze im Bereich der Enden der Umspritzung mit einer dünnen Hülse aus einem kraftstoffbeständigen Metall umgeben. Diese Hülse verhindert beim Umspritzen der Kabellitze noch zuverlässiger das Eindringen des Kunststoffs. Gleichzeitig sorgt der Druck während des Verfahrens für die notwendige Abdichtung zwischen Kabellitze und Hülse, so daß kein Kraftstoff zwischen Hülse und Kabellitze eindringen kann.

In anderen Anwendungsfällen, in denen zwei Bauteile mit einer Kabellitze elektrisch verbunden sind, kann es vorkommen, daß die Bauteile bereits hinreichend geschützt sind und nur die Kabellitze sich in einem Bereich mit aggressiven Medien befindet. In derartigen Fällen kann ebenfalls mit dem erfindungsgemäßen Verfahren die Kabellitze mit der partiellen Umspritzung versehen werden, wobei auch hier die Umspritzung auf den gefährdeten Bereich begrenzt ist.

In einer weiteren vorteilhaften Ausgestaltung der Erfindung, in der das elektrische Bauteil in einem Gehäuse angeordnet ist und die Kabellitze aus dem Gehäuse geführt wird, dient die partielle Umspritzung der Kabellitze gleichzeitig als Dichtung zwischen Kabellitze und Gehäuse.

In einer anderen vorteilhaften Ausgestaltung des Verfahrens wird als Kunststoff Polyoximethylen (POM) oder PPS verwendet. Die Verwendung dieser Kraftstoffe hat den Vorteil, daß diese Kunststoffe nicht nur gegenüber Kraftstoff sondern auch gegenüber anderen aggressiven Medien beständig ist.

Ein weiterer Vorteil besteht darin, daß durch eine geeignete Wahl der Wanddicke des Kunststoffs die Beweglichkeit der Kabellitze gezielt eingestellt werden kann. Bereits bei kleinen Wanddicken wird die Beweglichkeit so eingeschränkt, daß die Kabellitze in diesem Bereich aufgrund der mechanischen Steife selbsttragend wird. Ebenso kann die Umspritzung der Kabellitze eine bestimmte Form aufzwingen, die der Kabellitze im montierten Zustand entspricht. Dadurch läßt sich die Montage wesentlich vereinfachen.

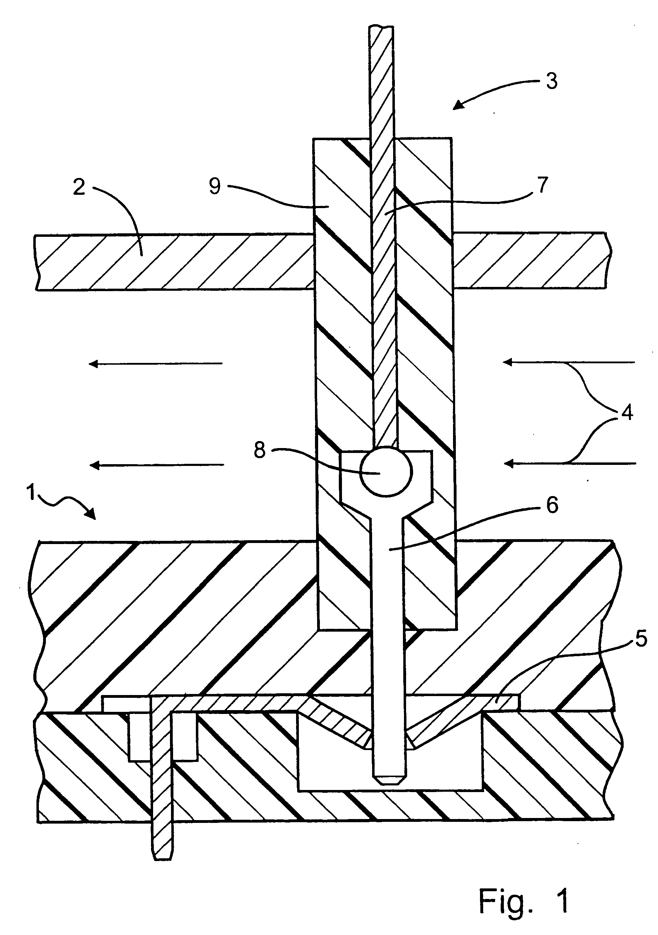

An einem Ausführungsbeispiel wird die Erfindung näher erläutert. Die einzige Figur zeigt einen Steckkontakt mit einem Abschnitt einer Kabellitze.

In der Figur ist ein Stecker 1 eines in einem Gehäuse 2 angeordneten, nicht dargestellten Elektromotors einer Kraftstoffpumpe und eine elektrische Leitung 3 zur Stromversorgung des Elektromotors dargestellt. Zwischen dem Stecker 1 und dem Gehäuse 2 strömt der von der Kraftstoffpumpe geförderte Kraftstoff 4. Der Stecker besitzt ein Kontaktblech 5 in das ein Kontaktstift 6 der elektrischen Leitung 3 eingreift. An dem gegenüberliegenden Ende des Kontaktstiftes 6 ist eine Kabellitze 7 angeschweißt. Zum Schutz der im Kraftstoff 4 liegende Verbindungsstelle 8 von Kabellitze 7 und Kontaktstift 6 wurde die Kabellitze 7 im Bereich der Verbindungsstelle 8 mit POM 9 umspritzt. Gleichzeitig dient die Umspritzung 9 als Abdichtung der durch das Gehäuse 2 der Kraftstoffpumpe geführten Kabellitze 7.

## Patentansprüche

1. Verfahren zum Schutz von Kabellitzen (7) in aggressiver Umgebung (4) wobei die Kabellitze mit mindestens einem elektrischen Bauteil verbunden ist, bei dem die Kabellitze mit einer Umhüllung versehen wird, **dadurch gekennzeichnet, daß** die Kabellitze nach dem Verbinden mit dem Bauteil (5) zusammen mit dem Bauteil in ein Spritzgußwerkzeug eingelegt wird und dass die Umhüllung **dadurch** bewerkstelligt wird, dass mindestens ein Bereich der Kabellitze mit kraftstoffbeständigem Kunststoff (9) umspritzt wird.

2. Verfahren nach Anspruch 1, **dadurch gekennzeichnet, daß** die Kabellitze im Bereich der Enden der Umspritzung zuvor mechanisch verdichtet wird.

3. Verfahren nach Anspruch 1 oder 2, **dadurch gekennzeichnet, daß** die Kabellitze im Bereich mindestens eines der Enden der Umspritzung zuvor mit einer Hülse umgeben wird.

4. Verfahren nach Anspruch 3, **dadurch gekennzeichnet, daß** als Hülse ein kraftstoffbeständiges Metall verwendet wird.

5. Verfahren nach mindestens einem der Ansprüche 1 bis 4, **dadurch gekennzeichnet, daß** die Beweglichkeit der Kabellitze durch Wahl der Wanddicke der Umspritzung gezielt eingestellt wird.

6. Verfahren nach mindestens einem der Ansprüche 1 bis 5, **dadurch gekennzeichnet, daß** die Kabellitze derart umspritzt wird, daß sie nach dem Umspritzen die Form ihrer späteren Einbaulage besitzt.

7. Verfahren nach mindestens einem der Ansprüche 1 bis 6, **dadurch gekennzeichnet, daß** als Kunststoff ein Polyoximethylen oder ein PPS verwendet wird.

## Claims

1. Process for protecting stranded cable conductors (7) in aggressive surroundings (4), the stranded cable conductor being connected to at least one electrical component, in which process the stranded cable conductor is provided with a sheathing, **characterized in that**, after being connected to the component (5), the stranded cable conductor is placed together with the component into an injection mold and **in that** the sheathing is obtained by at least one region of the stranded cable conductor being encapsulated in fuel-resistant plastic (9).

2. Process according to claim 1, **characterized in that** the stranded cable conductor is mechanically compressed in advance in the region of the ends of the encapsulation.

3. Process according to claim 1 or 2, **characterized in that** the stranded cable conductor is surrounded with a sleeve in advance in the region of at least one of the ends of the encapsulation.

4. Process according to claim 3, **characterized in that** a fuel-resistant metal is used as the sleeve.

5. Process according to at least one of claims 1 to 4, **characterized in that** the mobility of the stranded cable conductor is specifically set by choice of the wall thickness of the encapsulation.

6. Process according to at least one of claims 1 to 5, **characterized in that** the stranded cable conductor is encapsulated in such a way that, after being encapsulated, it has the form of its later installation position.

7. Process according to at least one of claims 1 to 6, **characterized in that** a polyoxymethylene or a PPS is used as the plastic.

## Revendications

1. Procédé permettant de protéger des torons de câbles (7) dans un environnement agressif (4), le toron de câble étant relié à au moins un composant électrique, au cours duquel le toron de câble est doté d'une enveloppe, **caractérisé par le fait que** le toron de câble est, après avoir été relié au composant (5), placé en commun avec le composant dans un outil de moulage par injection et que l'enveloppe est produite **par le fait que** au moins une partie du toron de câble est enveloppée par injection de matière plastique (9) résistant au carburant.

2. Procédé selon la revendication 1, **caractérisé par le fait que** le toron de câble est au préalable compressé mécaniquement dans la zone des extrémités de l'injection

3. Procédé selon la revendication 1 ou 2, **caractérisé par le fait que** le toron de câble est entouré au préalable d'une douille dans la zone de au moins l'une des extrémités de l'injection.

4. Procédé selon la revendication 3, **caractérisé par le fait qu'**on utilise, comme douille, un métal résistant au carburant.

5. Procédé selon au moins l'une des revendications 1 à 4, **caractérisé par le fait que** la mobilité du toron de câble est réglée d'une façon spécifique en choisissant l'épaisseur de l'injection.

6. Procédé selon au moins l'une des revendications 1 à 5, **caractérisé par le fait que** le toron de câble est enrobé par injection de manière telle qu'il a, après l'injection, la forme de sa position installée ultérieure.

7. Procédé selon au moins l'une des revendications 1 à 6, **caractérisé par le fait qu'**on utilise, en tant que matière plastique, un polyoximéthylène (POM) ou du PPS (ou polyphénylsiloxane).
